# EUROPÄISCHE PATENTSCHRIFT

(11) **EP 2 573 633 B1**
(45) Veröffentlichungstag und Bekanntmachung des Hinweises auf die Patenterteilung: **24.02.2016**
(21) Anmeldenummer: 11401595.1
(22) Anmeldetag: 20.09.2011
(51) Int. Cl.: G05B 19/042

(54) **Verfahren zum Betrieb eines Haushaltsgeräts und nach dem Verfahren arbeitendes Haushaltsgerät**
Method for operating a domestic appliance and domestic appliance operating by the method
Procédé destiné au fonctionnement d'un appareil ménager et appareil ménager fonctionnant selon ce procédé

(43) Veröffentlichungstag der Anmeldung: 27.03.2013
(73) Patentinhaber: Miele & Cie. KG, 33332 Gütersloh (DE)
(72) Erfinder: Herden, Rudolf, 33442 Herzebrock-Clarholz (DE); Meyer, Annette, 26919 Brake (DE); Schrutek, Christian, 76135 Karlsruhe (DE); Schöning, Achim, 33613 Bielefeld (DE); Westerheide, Ralf, 49176 Hilter (DE)

(56) Entgegenhaltungen:
- EP-A1- 0 971 173
- EP-A1- 1 758 000
- DE-A1- 4 422 128
- DE-A1-102006 047 813
- DE-A1-102010 030 016
- US-A- 5 495 095
- US-A1- 2004 267 383

## Beschreibung

Die vorliegende Erfindung betrifft ein Verfahren zum Betreiben eines Haushaltsgerätes, wie Waschautomat, Wäschetrockner, Geschirrspüler, Gargerät oder Getränkebereiter, wobei das Haushaltsgerät einen Speicher mit einem Steuerungsprogramm und zumindest einem vom Steuerungsprogramm ausführbaren Haushaltsgerätprogramm sowie eine Verarbeitungseinheit zur Ausführung des Steuerungsprogramms umfasst, wobei zumindest ein Teil des Speichers in Speicherbereiche unterteilt ist und wobei ein Haushaltsgerätprogramm jeweils einen der Speicherbereiche belegt, wobei ein belegter Speicherbereich dem Steuerungsprogramm notifiziert wird und der notifizierte Speicherbereich in eine Haushaltsgerätprogrammtabelle eingetragen wird, wobei im Betrieb des Haushaltsgeräts aus der Haushaltsgerätprogrammtabelle jeweils genau ein Haushaltsgerätprogramm ausgewählt und das ausgewählte Haushaltsgerätprogramm durch das in einer Verarbeitungseinheit in der Form eines Mikroprozessors ausgeführten Steuerungsprogramm aufgerufen und ausgeführt wird, ein Computerprogramm mit Programmcode-Mitteln, um alle Schritte vom besagten bzw. erfindungsgemäßen Verfahren auszuführen, wenn das Computerprogramm auf einer Steuerungseinrichtung für einen Haushaltsgerät ausgeführt wird, ein digitales Speichermedium mit elektronisch auslesbaren Steuersignalen, die so mit einem programmierbaren Steuergerät zusammenwirken können, um das besagte oder erfindungsgemäße Verfahren durchzuführen sowie ein Haushaltsgerät gemäß Anspruch 10.

Haushaltsgeräte sind an sich bekannt und werden mitunter auch als Waschmaschinen bezeichnet.

Bekannt ist, dass Haushaltsgeräten ein Mehrzahl von Haushaltsgerätprogrammen aufweisen, um z.B. bei Waschautomaten eine Behandlung von unterschiedlichen Arten von Textilien, also z.B. Wolle einerseits und Synthetik andererseits, zu ermöglichen und/oder um unterschiedliche Betriebsarten des Waschautomaten gezielt anwählen zu können, also eine Betriebsart "Schleudern", eine Betriebsart "Trocknen", eine Betriebsart "Waschen mit Schleudern,", eine Betriebsart "Waschen ohne Schleudern", eine Betriebsart "Waschen mit Schleudern und Trocknen", usw. Solche Haushaltsgerätprogramme sind bei einer Vielzahl von bei Waschautomaten noch in Hardware kodiert und eine Ausführungsform einer Hardwarekodierung einer Mehrzahl von Waschautomatenprogrammen ist ein sogenannter Programmschalter, wie er im Stand der Technik an sich bekannt ist.

Die EP 0 971 173 A1 offenbart ein Verfahren zum Betreiben eines Haushaltsgerätes, bei dem ein Speicher in Speicherbereiche unterteilt ist und jeweils ein Haushaltsgeräteprogramm einen der Speicherbereiche belegt. Beim Betrieb wird anhand einer Programmtabelle das ausgewählte Haushaltsgeräteprogramm ausgeführt. Die Programmtabelle ist so ausgeführt, dass in Abhängigkeit einer ausgewählten Landessprache die Haushaltsgeräteprogramme in verschiedenen Reihenfolgen dargestellt werden können.

Die EP 1 758 000 A1 offenbart eine Steuerungseinrichtung für einen Backofen, der einen Speicher umfasst, in dem Garprogramme bzw. Rezepte gespeichert sind. In Abhängigkeit von Benutzervorgaben wird immer nur eine Untermenge an Garprogrammen dem Benutzer zur Auswahl angezeigt.

Die DE 10 2006 047 813 A1 offenbart ein Gargerät mit einer Steuereinrichtung, die eine Mehrzahl gespeicherter Garprogramme bzw. Parameter zur Konfiguration eines Garprogramms umfasst. In Abhängigkeit von Faktoren, wie Aufstellort, Klima, Uhrzeit und Datum, werden entsprechend Programme oder Parameter in einer entsprechenden Reihenfolge dem Benutzer zur Auswahl angeboten.

Die US 5 495 095 A offenbart ein Verfahren zum Betreiben eines Haushaltsgerätes, bei dem ein Speicher in Speicherbereiche unterteilt ist und jeweils ein Haushaltsgeräteprogramm einen der Speicherbereiche belegt. Beim Betrieb wird anhand einer Programmtabelle das ausgewählte Haushaltsgeräteprogramm ausgeführt. Das Verfahren ist ferner dazu vorgesehen, dass der Benutzer in einem vorbestimmten Zeitfenster nach der Auswahl eines Haushaltsgeräteprogramms Änderungen hinsichtlich der vorgegebenen Parameter vornehmen kann.

Es hat sich allerdings ergeben, dass fest vorgegebene Haushaltsgerätprogramme, wie sie mit einem Programmschalter/Programmschaltwerk oder dergleichen realisierbar sind, für eine Vielzahl von heute von den Benutzern von Haushaltsgerät nachgefragten Leistungsmerkmalen zu wenig flexibel sind.

Eine Aufgabe der vorliegenden Erfindung besteht entsprechend darin, ein Verfahren zum Betrieb eines Haushaltsgeräts sowie einen nach dem Verfahren arbeitendes Haushaltsgerät anzugeben, bei dem diese Nachteile vermieden werden, bei dem sich also hinsichtlich der Haushaltsgerätprogramme eine erhöhte Flexibilität ergibt.

Diese Aufgabe wird erfindungsgemäß durch ein Verfahren mit den Merkmalen des unabhängigen Anspruchs 1 gelöst, soweit das Verfahren zum Betrieb eines Haushaltsgeräts betroffen ist. Danach ist bei einem Verfahren zum Betrieb eines Haushaltsgeräts, wobei das Haushaltsgerät einen Speicher mit einem Steuerungsprogramm und zumindest einem vom Steuerungsprogramm ausführbaren Haushaltsgerätprogramm sowie eine Verarbeitungseinheit zur Ausführung des Steuerungsprogramms umfasst, vorgesehen, dass zumindest ein Teil des Speichers in Speicherbereiche unterteilt ist und ein Haushaltsgerätprogramm jeweils einen der Speicherbereiche belegt, dass ein belegter Speicherbereich dem Steuerungsprogramm notifiziert wird und das Steuerungsprogramm den notifizierten Speicherbereich oder das dort geladene Haushaltsgerätprogramm in eine Haushaltsgerätprogrammtabelle einträgt und dass im Betrieb des Haushaltsgeräts aus der Haushaltsgerätprogrammtabelle jeweils genau ein Haushaltsgerätprogramm ausgewählt und das ausgewählte Haushaltsgerätprogramm durch das Steuerungsprogramm ausgeführt wird.

Der Vorteil besteht darin, dass die Haushaltsgerätprogramme jetzt in Software implementiert sind und dass das Haushaltsgerät zur Ausführung jeweils eines Haushaltsgerätprogramms ein durch eine Verarbeitungseinheit in Form von oder nach Art eines Mikroprozessors ausführbares Steuerungsprogramm umfasst. Bei einem solchen Verfahren oder einem nach dem Verfahren arbeitendes Haushaltsgerät kann jedes Haushaltsgerätprogramm grundsätzlich geändert werden, so dass z.B. eine Dauer eines Schleudervorgangs geänderten Bedürfnissen oder geänderten Charakteristika des jeweils behandelten Waschguts anpassbar ist. Außerdem besteht die Möglichkeit, dass jeder Benutzer eine individuelle Konfiguration von Haushaltsgerätprogrammen erhält oder sich selbst zusammenstellt. Das oder jedes derartige Haushaltsgerätprogramm kann in den Speicher des Haushaltsgeräts geladen werden und steht dort zur Ausführung durch das Steuerungsprogramm zur Verfügung. Selbst wenn sich zu einem späteren Zeitpunkt geänderte oder zusätzliche Anforderungen ergeben, kann grundsätzlich jedes Haushaltsgerätprogramm geändert werden oder es können zu den im Speicher des Haushaltsgeräts gespeicherten Haushaltsgerätprogrammen zusätzliche Haushaltsgerätprogramme hinzukommen.

Für den Benutzer des Haushaltsgeräts ergeben sich damit eine erheblich gesteigerte Flexibilität und evtl. auch eine erheblich gesteigerte Funktionalität des Haushaltsgeräts und eine weitgehende Möglichkeit zur Individualisierung des Funktionsumfangs des Haushaltsgeräts entsprechend der jeweiligen Bedürfnisse des Benutzers.

Ein besonderes Merkmal des hier vorgestellten Verfahrens und damit entsprechend auch ein besonderes Merkmal des nach dem Verfahren arbeitendes Haushaltsgerät ist, dass das Steuerungsprogramm des Haushaltsgeräts und das oder jedes Haushaltsgerätprogramm getrennte Einheiten, nämlich auf der einen Seite Programmcodeanweisungen und Daten für das Steuerungsprogramm und auf der anderen Seite zumindest Daten oder Daten und Programmcodeanweisungen für jedes Haushaltsgerätprogramm sind. Ein Haushaltsgerätprogramm kann also im Speicher des Haushaltsgeräts geändert werden, ohne dass dafür das zu dessen Ausführung vorgesehene übergeordnete Steuerungsprogramm geändert werden muss. Zur Information des Steuerungsprogramms über jedes ausführbare Haushaltsgerätprogramm ist vorgesehen, dass beim Laden eines Haushaltsgerätprogramms in einen der Speicherbereiche im Speicher des Haushaltsgeräts das Steuerungsprogramm entsprechend informiert (notifiziert) wird und der entsprechende Speicherbereich oder dessen Haushaltsgerätprogramm in eine Haushaltsgerätprogrammtabelle eingetragen wird. Dies ist ohne Weiteres möglich, wenn das Laden eines Haushaltsgerätprogramms in einen Speicherbereich unter Kontrolle des Steuerungsprogramms stattfindet, indem mit dem Steuerungsprogramm z.B. ein freier Speicherbereich ermittelt wird oder ein Speicherbereich, in dem sich ein nicht mehr benutztes, also z.B. ein in der Haushaltsgerätprogrammtabelle nicht mehr eingetragenes Haushaltsgerätprogramm befindet. Alternativ ist möglich, dass eine solche Notifikation über im Speicher vorhandene Haushaltsgerätprogramme erfolgt, indem das Steuerungsprogramm beim Einschalten des Haushaltsgeräts oder zu sonst geeigneten Zeitpunkten eine Art Suchlauf über die im Speicher gebildeten Speicherbereiche ausführt und jedes Mal, wenn auf diese Weise ein gültiges Haushaltsgerätprogramm gefunden wird, eine entsprechende Referenzierung in die Haushaltsgerätprogrammtabelle aufgenommen wird. Dann kann im Betrieb des Haushaltsgeräts aus der Haushaltsgerätprogrammtabelle jeweils genau ein Haushaltsgerätprogramm ausgewählt und das ausgewählte Haushaltsgerätprogramm durch das Steuerungsprogramm ausgeführt werden, z.B. indem das Haushaltsgerätprogramm durch das Steuerungsprogramm aufgerufen wird oder indem das Steuerungsprogramm Daten des Haushaltsgerätprogramms interpretiert und darauf basierende Aktionen auslöst.

Vorteilhafte Ausgestaltungen der Erfindung sind Gegenstand der abhängigen Ansprüche. Dabei verwendete Rückbeziehungen weisen auf die weitere Ausbildung des Gegenstandes des unabhängigen Anspruches durch die Merkmale des jeweiligen abhängigen Anspruches hin; sie können auch selbständige Erfindungen enthalten, die eine von den Gegenständen der vorhergehenden Ansprüche unabhängige Gestaltung aufweisen und sind nicht als ein Verzicht auf die Erzielung eines selbständigen, gegenständlichen Schutzes für deren Merkmale zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass beim Betrieb des Haushaltsgeräts durch das Steuerungsprogramm die Haushaltsgerätprogrammtabelle interpretiert sowie basierend darauf einem Benutzer eine Liste zur Verfügung stehender Haushaltsgerätprogramme präsentiert wird und dass zur Anpassung einer Reihenfolge der Haushaltsgerätprogramme in der Liste Referenzen auf Speicherbereiche mit Haushaltsgerätprogrammen oder Referenzen auf Haushaltsgerätprogramme in der Haushaltsgerätprogrammtabelle vertauscht werden. Der Vorteil dieser Ausführungsform ist zunächst, dass die Auswahl zur Verfügung stehender Haushaltsgerätprogramme erleichtert wird, indem diese einem Benutzer in einer Liste präsentiert werden. Die Liste umfasst dabei für jedes Haushaltsgerätprogramm eine aussagekräftige Beschreibung nach Art eines Titels oder dergleichen, wobei ein solcher Titel ggf. sogar vom Benutzer angepasst werden kann, um insoweit über die für den Benutzer individualisierten Haushaltsgerätprogramme hinaus noch eine weitere Individualisierung zu erreichen. In einer solchen Liste sind die verfügbaren Haushaltsgerätprogramme in einer bestimmten Reihenfolge sortiert, wobei sich die Reihenfolge z.B. aus einer Reihenfolge entsprechender Referenzen in der Haushaltsgerätprogrammtabelle ergibt. Für den Benutzer ist es allerdings oftmals günstiger, wenn viel benutzte Haushaltsgerätprogramme in einer solchen Liste an einer prominenten Stelle stehen, also z.B. am Anfang der Liste. Insofern ist eine Sortiermöglichkeit der Liste vorgesehen, die sich dadurch ergibt, dass Referenzen auf Speicherbereiche mit Haushaltsgerätprogrammen oder Referenzen auf Haushaltsgerätprogramme in der Haushaltsgerätprogrammtabelle vertauscht werden. Ein bisher also z.B. an fünfter Stelle in der Liste stehendes Haushaltsgerätprogramm, wobei sich die Position in der Liste daraus ergibt, dass eine Referenz auf das entsprechende Haushaltsgerätprogramm in der Haushaltsgerätprogrammtabelle ebenfalls an fünfter Stelle steht, kann an die erste Stelle einer solchen Liste gebracht werden, indem die Referenzen an der ersten Stelle und an der fünften Stelle der Haushaltsgerätprogrammtabelle ausgetauscht werden. Auf dieser Basis kann mit allen Positionen der Haushaltsgerätprogrammtabelle verfahren werden und die Referenz der siebten und der zweiten Position der Haushaltsgerätprogrammtabelle vertauscht werden, um ein bisher an siebter Stelle in der Liste aufscheinendes Haushaltsgerätprogramm an die zweite Position zu bringen. Sodann kann z.B. das ursprünglich an erster Stelle befindliche und jetzt durch Vertauschen auf die fünfte Position verschobene Haushaltsgerätprogramm an die dritte Stelle der Liste verschoben werden, indem die Referenzen der dritten und der fünften Position der Haushaltsgerätprogrammtabelle vertauscht werden, usw. Im Ergebnis ergibt sich eine individuell auf die Bedürfnisse des Benutzers abgestimmte Reihenfolge der Haushaltsgerätprogramme, so dass beim Betrieb des Haushaltsgeräts eine Auswahl des jeweils benötigten Haushaltsgerätprogramms vergleichsweise schnell vonstattengeht, indem der Benutzer das gesuchte Haushaltsgerätprogramm jedenfalls an einer erwarteten Position vorfindet und zusätzlich häufig benutzte Haushaltsgerätprogramme am Anfang der Liste vorfindet, so dass umfangreiche Navigationsoperationen in der Liste zur Auswahl eines Haushaltsgerätprogramms unnötig sind.

Wenn einem Haushaltsgerätprogramm eine Prüfsumme zugeordnet ist und vor Ausführung des Haushaltsgerätprogramms und anhand desselben durch das Steuerungsprogramm ein Vergleichswert ermittelt und mit der Prüfsumme verglichen wird, wobei die Ausführung des Haushaltsgerätprogramms nur bei Übereinstimmung oder zumindest ausreichender Übereinstimmung von Vergleichswert und Prüfsumme erfolgt oder möglich ist, ist eine Möglichkeit geschaffen, um eventuelle Datenfehler im Haushaltsgerätprogramm zu erkennen und im Falle solcher Datenfehler die Ausführung des Haushaltsgerätprogramms zu verhindern, damit Beschädigungen des jeweiligen Waschguts und/oder Beschädigungen des Haushaltsgeräts sicher vermieden werden. Bei einer solchen Prüfsumme kann es sich z.B. um einen sogenannten CR-Code (CRC) handeln. Grundsätzlich kommt jede Form einer Prüfsumme, also z.B. auch ein sogenanntes Parity-Bit, in Betracht, wobei unterschiedliche Prüfsummen Datenfehler mit unterschiedlichen Verlässlichkeitsraten erkennbar machen. Jedenfalls ist hinsichtlich des Vergleichswerts vorgesehen, dass dieser nach der selben Bildungsregel ermittelt wird, die auch der Bildung der Prüfsumme zugrunde liegt, so dass die Erwartung besteht, dass Vergleichswert und Prüfsumme identisch sind oder zumindest in signifikanten Teilen übereinstimmen, wenn hinsichtlich des Haushaltsgerätprogramms kein Datenfehler oder keine Datenfehler vorliegt bzw. vorliegen.

Bei einer besonderen Ausführungsform des Verfahrens ist vorgesehen, dass jedes Haushaltsgerätprogramm Daten zur Kodierung einer Folge von Aktionen umfasst und dass jede Aktion mit einem einen Startzeitpunkt kodierenden ersten Zeitwert oder mit einem einen Startzeitpunkt kodierenden ersten Zeitwert sowie einem eine Dauer kodierenden zweiten Zeitwert kombiniert ist. Jede Aktion bezieht sich dabei auf einen Zustand oder einen Zustandswechsel des Haushaltsgeräts, z.B. beim Waschautomaten indem eine Aktion das Einschalten des Trommelmotors zum Drehen der Waschtrommel des Waschautomaten mit einer vorgegebenen oder vorgebbaren Drehzahl kodiert. Jede Aktion in einer Folge von Aktionen eines Waschautomatenprogramms kann danach z.B. ein oder mehrere Programmcodeanweisungen zur Aktivierung oder Deaktivierung eines Aggregats oder einer Einheit (Trommelmotor, Wasserzufuhr, Heizung, usw.) umfassen, die bei Erreichen des den Startzeitpunkt kodierenden ersten Zeitwerts unter Kontrolle des Steuerungsprogramms durch die Verarbeitungseinheit des Waschautomaten ausgeführt werden. Wenn jede Aktion auch eine Dauer oder einen Endzeitpunkt kodierenden zweiten Zeitwert umfasst, kann die Aktion entweder Programmcodeanweisungen umfassen, die beim Erreichen dieses Zeitpunkts ausgeführt werden, oder es wird die zum Startzeitpunkt veranlasste Aktivierung oder Deaktivierung einzelner oder mehrerer Aggregate oder Einheiten umgekehrt, also ausgeschaltet, wenn zum Startzeitpunkt eingeschaltet wurde und eingeschaltet, wenn zum Startzeitpunkt ausgeschaltet wurde.

Eine Aktion muss nicht notwendig Programmcodeanweisungen zur Aktivierung oder Deaktivierung einzelner Aggregate/Einheiten des Waschautomaten umfassen, sondern es kann auch vorgesehen sein, dass solche Programmcodeanweisungen nicht vom Waschautomatenprogramm, sondern vom Steuerungsprogramm umfasst sind. Demnach zeichnet sich eine besondere Ausführungsform des Verfahrens dadurch aus, dass das Steuerungsprogramm für jede Aktion eine Programmcodeanweisung oder eine Folge von Programmcodeanweisungen zur Aktivierung oder Deaktivierung des oder jedes durch die Aktion kodierten Aggregats oder der oder jeder durch die Aktion kodierten Einheit des Waschautomaten aufweist. Wenn das Steuerungsprogramm und nicht das Haushaltsgerätprogramm die Programmcodeanweisungen aufweist, hat dies den Vorteil, dass das Haushaltsgerätprogramm unabhängig von der Hardware einer Steuerungseinrichtung, insbesondere unabhängig von einer Verarbeitungseinheit einer solchen Steuerungseinrichtung, ist, so dass gleiche Haushaltsgerätprogramme in unveränderter Form auf unterschiedliche Typen von Haushaltsgerät geladen und dort ausgeführt werden können, unabhängig von der Hardware, mit der deren jeweilige Steuerungseinrichtung realisiert ist.

Wenn das Steuerungsprogramm eine Zuordnung von jeweils einer Aktion zu einem oder mehreren Aggregaten und/oder zu einer oder mehreren Einheiten des Haushaltsgerät und einer Aktivierungsart umfasst, ist eine einfache Möglichkeit zur Entkopplung zwischen Haushaltsgerätprogramm und Steuerungsprogramm gegeben. Die jeweilige Zuordnung fungiert dabei quasi als Schnittstelle zwischen dem Steuerungsprogramm und dem oder jedem Haushaltsgerätprogramm. Als Zuordnung kommt eine Verweisung nach Art einer sogenannten Look-Up-Table (LUT) oder dergleichen in Betracht. Eine Aktion "Heizen" kann aufgrund einer solchen Zuordnung einerseits der Heizung des Haushaltsgeräts und andererseits der Aktivierungsart "Einschalten" zugeordnet werden. Eine Möglichkeit zur Qualifizierung einer von einem Haushaltsgerätprogramm umfassten Aktion als Aktion zur Aktivierung der Heizung des Waschautomaten kann z.B. dadurch erfolgen, dass jeder Aktion eine Kennung z.B. in numerischer Form oder in Form eines Textstrings, also z.B. "17" oder "Heizen", zugeordnet ist, die aufgrund einer im Steuerungsprogramm hinterlegten Zuordnung interpretierbar ist. Wenn als Zuordnung also z.B. eine Look-Up-Table vorgesehen ist, würde zum Ausführen einer mit "17" oder einer als "Heizen" gekennzeichneten Aktion in dieser Tabelle ein entsprechender Eintrag gesucht und sobald ein passender Eintrag gefunden ist, kann die mit dem Eintrag in der Look-Up-Table verknüpfte Information ausgewertet werden. Bei einer im speziellen Beschreibungsteil beschriebenen Ausführungsform des Verfahrens ist dabei vorgesehen, dass auf diese Weise ein Programmcodeblock mit zumindest einer Programmcodeanweisung referenziert wird und dass die oder jede Programmcodeanweisung die mit der jeweiligen Aktion intendierten Maßnahmen bei deren Ausführung durch die Verarbeitungseinheit des Waschautomaten bewirkt. Auch hier ist noch die Trennung zwischen Waschautomatenprogramm und Steuerungsprogramm gegeben, denn die oder jede Programmcodeanweisung des Programmcodeblocks ist Bestandteil des Steuerungsprogramms und damit für die jeweilige Verarbeitungseinheit des Haushaltsgerät passend. Ein und dasselbe Haushaltsgerätprogramm kann damit grundsätzlich auf unterschiedliche Typen von Haushaltsgerät geladen werden, solange der jeweilige Waschautomat mit dessen Steuerungsprogramm in der Lage ist, eine Zuordnung zwischen jeder Aktion des Haushaltsgerätprogramms und den Aggregaten oder Einheiten des Haushaltsgerät herzustellen.

Die oben genannte Aufgabe wird auch durch ein Haushaltsgerät gelöst, der nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm, insbesondere das oben erwähnte und im Folgenden mit weiteren Details beschriebene Steuerungsprogramm, mit durch einen Computer ausführbaren Programmcodeanweisungen und andererseits ein Speichermedium mit einem derartigen Computerprogramm sowie schließlich auch ein Haushaltsgerät oder eine Steuereinrichtung eines Haushaltsgeräts, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, die zum Beispiel durch Kombination oder Abwandlung von einzelnen in Verbindung mit den in der allgemeinen Beschreibung, der oder jeder Ausführungsform sowie den Ansprüchen beschriebenen und in den Zeichnungen enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen. Es zeigen in schematisch skizzierter Form:
- Figur 1: einen Waschautomaten mit einem Speicher und dort geladenen oder ladbaren Haushaltsgerätprogrammen,
- Figur 2: den Speicher gemäß Figur 1 mit weiteren Details,
- Figur 3: eine Illustration zum Aufbau einer Liste anhand von im Speicher befindlichen, ausführbaren Haushaltsgerätprogrammen,
- Figur 4: weitere Details eines Haushaltsgerätprogramms mit einer Folge von davon umfassten Aktionen,
- Figur 5: eine Illustration zur Interpretation einzelner Aktionen eines Haushaltsgerätprogramms sowie
- Figur 6: ein Flussdiagramm zu Illustration eines Ablaufs des Steuerungsprogramms.

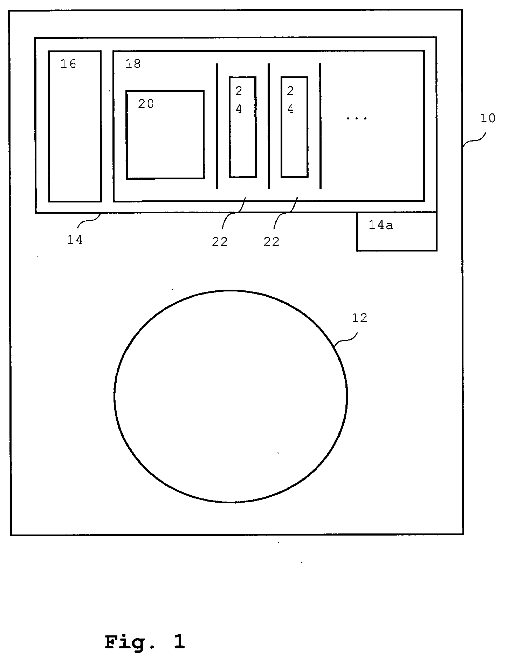

Figur 1 zeigt schematisch vereinfacht und auf die im Zusammenhang mit der hier vorgelegten Beschreibung relevanten Aspekte reduziert als Haushaltsgerät einen Waschautomaten 10, der sämtliche Komponenten und Aggregate (Funktionsgruppen) umfasst oder umfassen kann, wie sie für Waschautomaten 10 zur Durchführung von Waschaktionen üblich sind, darunter zumindest eine Waschtrommel 12, usw. Des Weiteren weist der Waschautomat 10 eine Steuerungseinrichtung 14 auf, die hier nur aus Gründen der Übersichtlichkeit überproportional groß dargestellt ist. Die Steuerungseinrichtung 14 umfasst eine Verarbeitungseinheit 16 in Form von oder nach Art eines Mikroprozessors sowie einen Speicher 18. In den Speicher 18 ist ein Steuerungsprogramm 20 gespeichert. Unter Kontrolle des Steuerungsprogramms 20 erfolgt bei dessen Ausführung durch die Verarbeitungseinheit 16 im Betrieb des Waschautomaten 10 der jeweilige Wasch- oder Trockenvorgang oder ein kombinierter Wasch- und Trockenvorgang unter Zuhilfenahme des jeweils eingestellten Waschautomatenprogramms 24. Das Steuerungsprogramm 20 ist hierbei als übergeordnetes Programm oder Betriebssystem anzusehen, das den Ablauf eines ausgewählten Waschautomatenprogramms 24 zulässt oder bewirkt. Zumindest ein Teil des Speichers 18 ist in Speicherbereiche 22 unterteilt, die jeweils durch ein Waschautomatenprogramm 24 belegt oder frei sind.

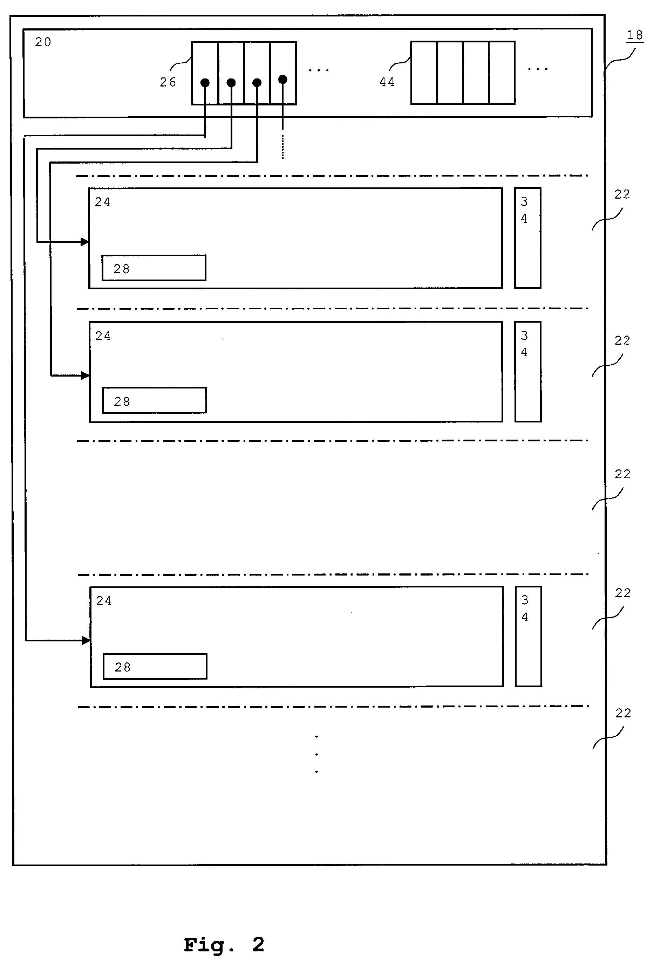

Figur 2 zeigt aus der Darstellung in Figur 1 nur noch den Speicher 18 mit weiteren Details. Ein belegter Speicherbereich 22 wird dem Steuerungsprogramm 20 notifiziert bzw. vom Steuerungsprogramm 20 identifiziert und im Bereich des Steuerungsprogramms 20 in eine Waschautomatenprogrammtabelle 26 eingetragen. Bei der Waschautomatenprogrammtabelle 26 kann es sich um eine statische Tabelle mit einer festen Anzahl von Tabellenelementen oder eine dynamische Datenstruktur nach Art einer verketteten Liste oder dergleichen mit einer grundsätzlich nicht vorab festgelegten Anzahl von Tabellenelementen handeln. Wie die Darstellung in Figur 2 zu verdeutlichen sucht, muss die Reihenfolge der Waschautomatenprogramme 24 im Speicher 18 nicht notwendig mit der Reihenfolge der Referenzen in der Waschautomatenprogrammtabelle 26 auf jeweils einen Speicherbereich 22 oder ein Waschautomatenprogramm 24 übereinstimmen. Außerdem können im Speicher 18 einzelne Speicherbereiche 22 oder mehrere Speicherbereiche 22 ohne Weiteres leer sein, also kein aktuell dort gespeichertes Waschautomatenprogramm 24 umfassen. Schließlich muss nicht jedes im Speicher 18 befindliche Waschautomatenprogramm 24 in der Waschautomatenprogramm 24 referenziert sein und der Speicherbereich 22, in dem sich ein solches nicht referenziertes Waschautomatenprogramm 24 befindet, steht zum Beispiel zum Überschreiben mit neuen Waschautomatenprogrammen 24 zur Verfügung. Im Betrieb des Waschautomaten 10 wird durch den Benutzer mittels einer Bedien- und Anzeigeeinrichtung 14a (Fig. 1) aus der Waschautomatenprogrammtabelle 26 jeweils genau ein Waschautomatenprogramm 24 ausgewählt und das ausgewählte Waschautomatenprogramm 24 durch das Steuerungsprogramm 20 ausgeführt.

Die Waschautomatenprogrammtabelle 26 oder jede andere geeignete Referenzierung einer Mehrzahl von als Waschautomatenprogramm 24 fungierenden Datenpaketen bildet eine Schnittstelle zwischen dem Steuerungsprogramm 20 und dem oder jedem Waschautomatenprogramm 24. Eine Auswahl eines Waschautomatenprogramms 24 aus der Waschautomatenprogrammtabelle 26 meint daher, dass die jeweilige Auswahl über die als Schnittstelle fungierende Waschautomatenprogrammtabelle 26 erfolgt.

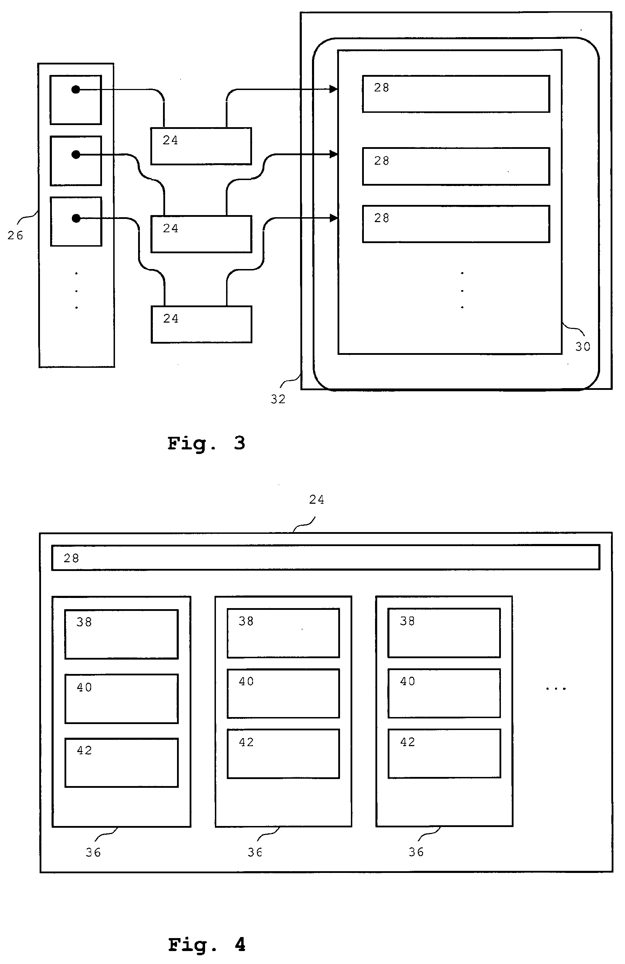

Einem Benutzer wird dabei üblicherweise eine Mehrzahl von Auswahloptionen an einer Anzeigeeinrichtung 14a des Waschautomaten 10 dargestellt und der Benutzer hat die Möglichkeit, in dieser Auswahl und einer darauf basierenden Liste 30 (Figur 3) zu navigieren, also einen sogenannten Cursor zu genau einem Waschautomatenprogramm 24 zu bewegen und sobald das gewünschte Waschautomatenprogramm 24 gefunden ist, dessen Auswahl zu bestätigen. Die Daten für eine solche Anzeige können entweder aus der Waschautomatenprogrammtabelle 26 oder aus der Waschautomatenprogrammtabelle 26 und dem oder jedem Waschautomatenprogramm 24 kommen. Dazu kann z.B. vorgesehen sein, dass jedes Waschautomatenprogramm 24 als Daten einen Titel 28 umfasst, auf den über die Waschautomatenprogrammtabelle 26 mittelbar über das dort referenzierte Waschautomatenprogramm 24 ein Zugriff möglich ist. Für jedes in der Waschautomatenprogrammtabelle 26 referenzierte Waschautomatenprogramm 24 kann damit dessen Titel 28 auf einer Anzeigeeinrichtung zur Auswahl durch den Benutzer dargestellt werden. Dabei ist darauf hinzuweisen, dass der Benutzer dann in einer solchen Darstellung zunächst nicht das eigentliche Waschautomatenprogramm 24, sondern nur einen der Titel 28 auswählt, wobei das Steuerungsprogramm 20 durch Interpretation der Waschautomatenprogrammtabelle 26 eine solche Auswahl des Benutzers in eine Auswahl des durch den jeweiligen Titel 28 gekennzeichneten Waschautomatenprogramms 24 umsetzt.

Der Aufbau und die Darstellung der Liste 30 erfolgt, indem über die Waschautomatenprogrammtabelle 26 und deren Referenzen zu jeweils einem Waschautomatenprogramm 24 mittelbar ein Zugriff auf die davon umfassten Titel 28 möglich ist, so dass diese in einer Liste 30 auf einer in Figur 3 schematisch vereinfacht als Monitor 32 dargestellten Anzeigeeinrichtung 14a eines Waschautomaten 10 (Figur 1) darstellbar sind. Das Steuerungsprogramm 20 interpretiert also zur Auswahl eines Waschautomatenprogramms 24 durch einen Benutzer die Waschautomatenprogrammtabelle 26, indem entweder direkt aus den Elementen der Waschautomatenprogrammtabelle 26 ein Titel 28 oder dergleichen ausgelesen wird oder indem mittelbar über die Referenzierung des jeweiligen Waschautomatenprogramms 24 in einem der Elemente der Waschautomatenprogrammtabelle 26 ein Zugriff auf den jeweiligen Titel 28 und damit dessen Darstellung in der Liste 30 erfolgt.

Bereits in Figur 2 war dargestellt, dass die Reihenfolgen der Referenzen auf jeweils ein Waschautomatenprogramm 24 in den einzelnen Elementen der Waschautomatenprogrammtabelle 26 nicht notwendig der Reihenfolge der Waschautomatenprogramme 24 in den Speicherbereichen 22 des Speichers 18 entsprechen muss. Wenn eine Reihenfolge der Waschautomatenprogramme 24 für deren Auswahl geändert werden soll, ist dafür kein Verschieben, Umkopieren oder dergleichen der Waschautomatenprogramme 24 im Speicher 18 notwendig. Stattdessen reicht es aus, dass zur Anpassung einer Reihenfolge der Waschautomatenprogramme 24 in der Liste 30 die Referenzen auf das jeweilige Waschautomatenprogramm 24 in der Waschautomatenprogrammtabelle 26 vertauscht oder hinsichtlich der Positionierung der Programme 24 entsprechend verändert werden. Dabei ist es auch unerheblich, ob das jeweilige Element der Waschautomatenprogrammtabelle 26 ein Waschautomatenprogramm 24 oder einen Speicherbereich 22 referenziert. Solange jeder Speicherbereich 22 genau ein Waschautomatenprogramm 24 umfasst, ist die Referenzierung eines der Speicherbereiche 22 gleichwertig mit der direkten Referenzierung eines Waschautomatenprogramms 24, weil eine Referenzierung eines Speicherbereichs 22 z.B. dessen Startadresse im Speicher 18 bezeichnet und die Startadresse des Speicherbereichs 22 mit der Startadresse eines dort ladbaren Waschautomatenprogramms 24 entweder zusammenfallen kann oder zumindest doch in einer festen Relation steht, z.B. derart, dass das Waschautomatenprogramm 24 stets zwei Byte nach der Startadresse des jeweiligen Speicherbereichs 22 beginnt. All dies ist implementationsabhängig und kann je nach Situation des Einzelfalls ausgewählt werden. Für die Auslegung der hier vorgelegten Beschreibung gilt auf dieser Basis jedenfalls, dass eine Referenzierung eines Waschautomatenprogramms 24 in der Waschautomatenprogrammtabelle 26 äquivalent mit einer Referenzierung eines Speicherbereichs 22 zur Aufnahme eines Waschautomatenprogramms 24 ist.

In Figur 2 ist bereits dargestellt, dass jedem Waschautomatenprogramm 24 eine Prüfsumme 34 zugeordnet ist. Die Prüfsumme 34 kann alternativ und in äquivalenter, jedoch nicht dargestellter Art und Weise auch als zusätzliches Datum von dem Waschautomatenprogramm 24 umfasst sein. Die weitere Beschreibung geht von der dargestellten Situation aus, bei der die Prüfsumme 34 zusammen mit dem Waschautomatenprogramm 24 in genau einem Speicherbereich 22 abgelegt ist und so eine Zuordnung gegeben ist. Die Prüfsumme 34 wird spätestens dann gebildet, wenn das Waschautomatenprogramm 24 in den Speicher 18 geladen wird, üblicherweise aber bereits dann, wenn das Waschautomatenprogramm 24 erstellt wird, denn die Prüfsumme 34 wird über das Waschautomatenprogramm 24 und die davon umfassten Daten gebildet und soll eventuelle Veränderungen der Daten des Waschautomatenprogramms 24 im Betrieb des Waschautomaten 10 erkennbar machen. Dazu ist vorgesehen, dass vor Ausführung des Waschautomatenprogramms 24 und anhand desselben durch das Steuerungsprogramm 20 ein Vergleichswert ermittelt wird. Dieser Vergleichswert wird nach der gleichen Bildungsregel erzeugt, wie sie auch der Erzeugung der Prüfsumme 34 zugrunde gelegen hat. D.h., dass die Erwartung besteht, dass bei einem Waschautomatenprogramm 24, dessen Daten genau den vorgesehen Daten entsprechen, Prüfsumme 34 und der zu dem jeweiligen Waschautomatenprogramm 24 im Betrieb durch das Steuerungsprogramm 20 gebildete Vergleichswert übereinstimmen müssen. Deshalb ist vorgesehen, dass vor Ausführung des Waschautomatenprogramms 24 und nach Bildung des Vergleichswerts dieser mit der jeweiligen Prüfsumme 34 verglichen wird und eine Ausführung des Waschautomatenprogramms 24 nur bei Übereinstimmung oder zumindest ausreichender Übereinstimmung von Vergleichswert und Prüfsumme 34 erfolgt.

Figur 4 zeigt jetzt weitere Details eines Waschautomatenprogramms 24 und insoweit die davon umfassten Daten. Danach umfasst nämlich jedes Waschautomatenprogramm 24 Daten zur Kodierung einer Folge von Aktionen 36. Jede Aktion 36 ist dabei ein Datensatz, der als Datum zumindest eine Kennung 38 sowie zumindest einen ersten Zeitwert 40, ggf. einen ersten und einen zweiten Zeitwert 40, 42 umfasst. Die Kennung 38 spezifiziert die mit der jeweiligen Aktion 36 kodierte Betriebssituation des Waschautomaten 10. Betriebssituation 36 in diesem Sinne, die entsprechend jeweils eine Kennung 38 enthalten, können z.B. "Waschen", "Spülen", "Schleudern", "Trocknen", usw. sein. Der erste Zeitwert 40 kodiert dazu einen Startzeitpunkt und der zweite Zeitwert 42 eine Dauer der jeweiligen Aktion 36. Äquivalent dazu ist eine Ausführungsform, bei welcher der zweite Zeitwert 42 einen Endzeitpunkt der Aktion 36 kodiert. Weitere Parameter, wie Temperaturwerte oder Leistungswerte für die Heizungssteuerung oder Drehzahlen für die Steuerung des Antriebsmotors usw. sind ebenfalls in diesen sogenannten Betriebssituationstabellen 36 als Code abgelegt.

Die oben genannten programmierten Betriebssituationen 36 sind nur beispielhaft zu verstehen und je nach Ausgestaltung des Steuerungsprogramms 20 kann z.B. eine Betriebssituation wie "Spülen" kodierende Kennung 38 vom Steuerungsprogramm 20 dahingehend ausgewertet werden, dass dazu eine Wasserzufuhr (nicht dargestellt) aktiviert und ebenfalls ein Motor (nicht dargestellt) zum Antrieb der im Folgenden kurz als Trommel 12 bezeichneten Waschtrommel 12 (Figur 1) eingeschaltet wird. Äquivalent dazu ist eine Situation, bei der durch die als Daten eines Waschautomatenprogramms 24 vorsehbaren Aktionen 36 die Zustände oder Zustandsänderungen des Waschautomaten 10 feingranularer kodiert sind, so dass eine Kennung 38 das Starten der Trommel 12, eine andere Kennung 38 das Stoppen der Trommel 12, eine weitere Kennung 38 die Aktivierung einer Wasserzufuhr, eine weitere Kennung 38 das Unterbrechen der Wasserzufuhr, eine nochmals weitere Kennung 38 die Aktivierung eines Heizaggregats (nicht dargestellt), eine nochmals weitere Kennung 38 die Deaktivierung eines solchen Heizaggregats, usw. kodiert. Implementationsabhängig bzw. in einer zweckmäßigen Weiterbildung kann dazu zumindest eine Aktion 36 auch eine Mehrzahl von Kennungen 38 umfassen, um auf diese Weise eine gleichzeitige Aktivierung oder Deaktivierung mehrerer Einheiten oder Aggregate des Waschautomaten 10 zum jeweils durch den von der Aktion 36 umfassten und den Startzeitpunkt solcher Aktionen kodierenden ersten Zeitwert 40 zu spezifizieren.

Das Waschautomatenprogramm 24 benötigt danach zur Aktivierung oder Deaktivierung einzelner Aggregate oder Einheiten des Waschautomaten 10 keine Programmcodeanweisungen. Es reicht vielmehr aus, wenn das Steuerungsprogramm 20 für jede Aktion 36 eine Programmcodeanweisung oder eine Folge von Programmcodeanweisungen zur Aktivierung oder Deaktivierung des oder jedes durch die Aktion 36 kodierten Aggregats oder der oder jeder durch die Aktion 36 kodierten Einheit des Waschautomaten 10 aufweist. Dazu ist in Figur 2 im Bereich des Steuerungsprogramms 20 bereits schematisch vereinfacht eine Unterprogrammsammlung 44 mit einer Mehrzahl von Elementen gezeigt, wobei jedes Element der Unterprogrammsammlung 44 ein oder mehrere Programmcodeanweisungen zur Aktivierung oder Deaktivierung von Einheiten oder Aggregaten des Waschautomaten 10 umfasst.

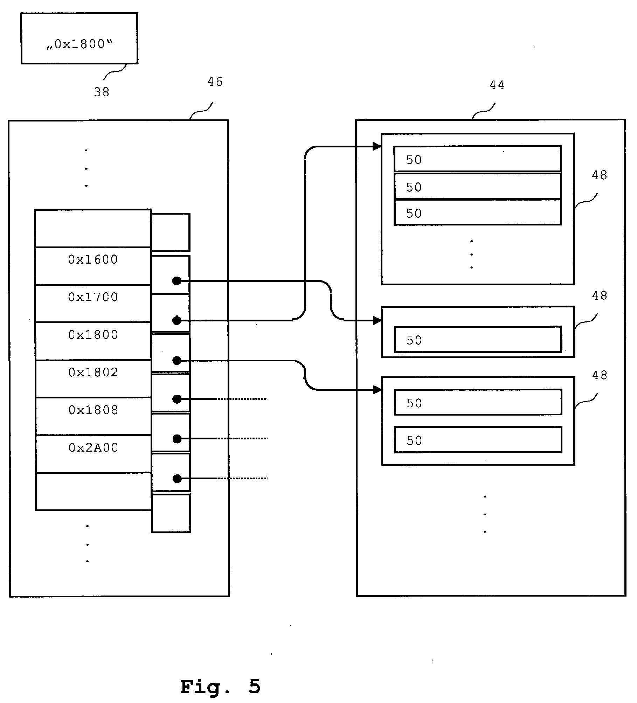

Figur 5 illustriert das Zusammenspiel der von einem Waschautomatenprogramm 24 umfassten Aktionen 36 und deren jeweiliger Kennung 38 mit der Unterprogrammsammlung 44. Figur 5 zeigt dazu zunächst exemplarisch eine Kennung 38 einer Aktion 36 eines Waschautomatenprogramms 24 und dabei, dass diese Kennung 38 z.B. ein numerischer Wert, hier als "0x1800" dargestellt, ist. Mit dem Wert der jeweiligen Kennung 38 ist nun im Bereich des Steuerungsprogramms 20 über eine dort hinterlegte Verweistabelle oder Zuordnungstabelle 46 (Look-Up-Table) ein Zugriff auf genau ein Programmelement der Unterprogrammsammlung 44 möglich. Figur 5 zeigt dazu, dass die Unterprogrammsammlung 44 eine Mehrzahl von Programmcodeblöcken 48 umfasst, von denen jeder seinerseits zumindest eine Programmcodeanweisung 50 umfasst. Jeder Eintrag der Verweistabelle 46 referenziert genau einen Programmcodeblock 48 und ein Eintrag der Verweistabelle 46 wird anhand des Wertes der Kennung 38 der jeweils momentan verarbeiteten Aktion 36 ausgewählt. Damit erfolgt mittelbar über den Wert der jeweiligen Kennung 38 auch die Auswahl eines Programmcodeblocks 48 und eine solche Auswahl bewirkt schließlich die Ausführung der oder jeder von dem betreffenden Programmcodeblock 48 umfassten Programmcodeanweisung 50. Nicht alle Referenzen sind in Figur 5 im Einzelnen dargestellt. Figur 5 soll vielmehr das Prinzip der als Schnittstelle zwischen jeweils einer Kennung 38 im Waschautomatenprogramm 24 und einem Programmcodeblock 48 im Steuerungsprogramm 20 fungierenden Verweistabelle 46 verdeutlichen. Wichtig ist, dass jeder Eintrag in der Verweistabelle 46 einen Programmcodeblock 48 referenziert, wobei grundsätzlich durchaus in Betracht kommt, dass mehrere Einträge der Verweistabelle 46 den gleichen Programmcodeblock 48 referenzieren. Einträge in der Verweistabelle 46, die keinen Programmcodeblock 48 referenzieren, müssen eindeutig als solche gekennzeichnet sein, z.B. indem die Referenz auf einen nicht existierenden Speicherort verweist, der eindeutig als solcher erkennbar ist, (sogenannter Null-Pointer).

Auf diese Art und Weise umfasst das Steuerungsprogramm 20 also in der Unterprogrammsammlung 44 für jede Aktion 36 eine Programmcodeanweisung 50 oder eine Folge von Programmcodeanweisungen 50 zur Aktivierung oder Deaktivierung des oder jedes durch die Aktion 36 und deren Kennung 38 kodierten Aggregats oder Einheit des Waschautomaten 10.

Die Verweistabelle 46 ist dabei ein Beispiel für eine Zuordnung von jeweils einer Aktion 36 zu einem oder mehreren Aggregaten oder Einheiten des Waschautomaten 10 und einer Aktivierungsart des Aggregats bzw. der Einheit. Exemplarisch kann dazu z.B. auf die Darstellung in Figur 1 verwiesen werden, bei welcher der Zahlenwert der Kennung 38 zur Auswahl eines Programmcodeblocks 48 mit zwei Programmcodeanweisungen 50 führt. Die erste dieser beiden Programmcodeanweisungen 50 kann z.B. eine Wasserzufuhr stoppen und die zweite dieser beiden Programmcodeanweisungen 50 kann z.B. einen die Trommel 12 antreibenden Motor starten. Der betreffende Programmcodeblock 48 bewirkt damit, dass beim Starten eines Schleuderprogramms die Wasserzufuhr unterbrochen ist. Anhand des Vorstehenden sind jederzeit aus dem Szenario der möglichen Betriebsarten oder Betriebsartenwechsel eines Waschautomaten 10 andere und zusätzliche sowie im Einzelfall auch erheblich komplexere Beispiele konstruierbar.

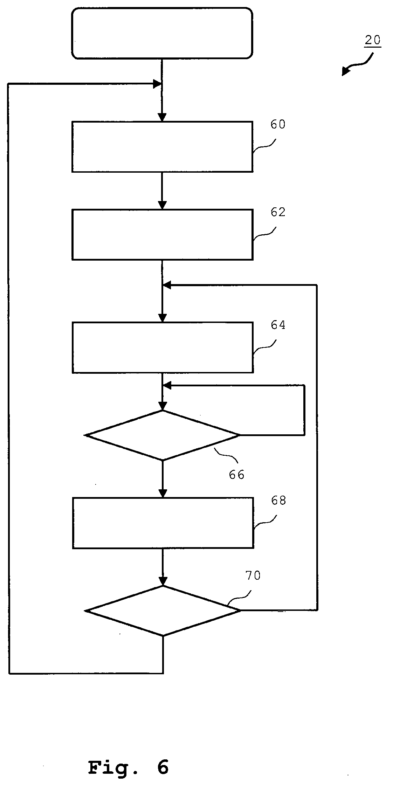

Figur 6 zeigt abschließend schematisch vereinfacht den Ablauf des Steuerungsprogramms 20 beim Betrieb des Waschautomaten 10. Durch einen ersten Funktionsblock 60 erfolgt dabei die Auswahl eines Waschautomatenprogramms 24 wie oben beschrieben. Sobald ein Waschautomatenprogramm 24 ausgewählt ist, erfolgt in einem zweiten Funktionsblock 62 die Bildung des Vergleichswerts und dessen Prüfung auf Übereinstimmung oder ausreichende Übereinstimmung mit der Prüfsumme 34 des ausgewählten Waschautomatenprogramms 24. Dass das Waschautomatenprogramm 24 nicht ausgeführt wird, wenn das Vergleichsergebnis negativ ist, ist in dem Flussdiagramm in Figur 6 nicht dargestellt, im Steuerungsprogramm 20 aber selbstverständlich gleichwohl vorgesehen. Sobald jedenfalls das Waschautomatenprogramm 24 ausgewählt und dessen Ausführbarkeit sichergestellt ist, erfolgt in einem dritten Funktionsblock 64 das Einlesen einer Aktion 36 (vgl. Figur 4) des Waschautomatenprogramms 24. Beim erstmaligen Aufruf des dritten Funktionsblocks 64 wird die erste im jeweiligen Waschautomatenprogramm 24 gespeicherte Aktion 36 eingelesen. Das Einlesen umfasst das Einlesen der Kennung 38 und zumindest das Einlesen des ersten Zeitwerts 40, ggf. das Einlesen des ersten und zweiten Zeitwerts 40, 42. Mit einem vierten Funktionsblock 66 wird so lange "gewartet", bis der durch den ersten Zeitwert 40 kodierte Startzeitpunkt erreicht ist. Dieses Warten ist in der Darstellung in Figur 6 dadurch symbolisiert, dass stets zu einer Position vor den vierten Funktionsblock 66 verzweigt wird, solange der Startzeitpunkt noch nicht erreicht ist. Je nach Ausführung der Steuerungseinrichtung, also z.B. wenn diese zur Ausführung des Steuerungsprogramms 20 ein Echtzeitbetriebssystem umfasst oder wenn das Steuerungsprogramm 20 selbst Routinen umfasst, wie sie normalerweise ein Echtzeitbetriebssystem aufweist, kann anstelle einer solchen Schleife die Fortsetzung des Steuerungsprogramms 20 auch konkret für den jeweiligen Startzeitpunkt 40 eingeplant werden. Sobald der Startzeitpunkt 40 erreicht ist und die durch den vierten Funktionsblock 66 kodierte Fallunterscheidung ein anderes Ergebnis liefert, wird mit einem fünften Funktionsblock 68 die Ausführung der oder jeder durch die Kennung 38 der aktuellen Aktion 36 kodierten Programmcodeanweisung 50 veranlasst (vgl. Figur 5). Durch einen sechsten Funktionsblock 70 wird sodann überprüft, ob das ausgewählte Waschautomatenprogramm 24 nach der jeweils aktuell bearbeiteten Aktion 36 weitere Aktionen 36 umfasst. Ggf. wird vor den dritten Funktionsblock 64 verzweigt und mit dem dritten Funktionsblock 64 wird sodann die nächste Aktion 36 des Waschautomatenprogramms 24 eingelesen und deren Ausführung erfolgt wie soeben beschrieben. Sobald bei dem ausgewählten Waschautomatenprogramm 24 dessen letzte Aktion 36 ausgeführt wurde, liefert die zur Implementierung des sechsten Funktionsblocks 70 vorgesehene Fallunterscheidung ein anderes Ergebnis und es wird vor den ersten Funktionsblock 60 verzweigt, so dass durch erneute Ausführung des ersten Funktionsblocks 60 ein anderes Waschautomatenprogramm 24 ausgewählt und zu gegebener Zeit ausgeführt werden kann.

Die Darstellung in Figur 6 zeigt die Situation, bei der mit jeder Aktion 36 in einem Waschautomatenprogramm 24 ein Startzeitpunkt kodiert ist und Figur 6 zeigt insoweit das durch die Implementation des vierten Funktionsblocks 66 realisierte Abwarten des Erreichens des so kodierten Startzeitpunkts 40. Eine solche Ausführungsform setzt voraus, dass ein auf diese Weise aktiviertes Aggregat oder eine auf diese Weise aktivierte Einheit zu einem späteren Zeitpunkt (Endzeitpunkt) deaktiviert wird und dass das Waschautomatenprogramm 24 eine diesbezügliche Aktion umfasst. Äquivalent dazu ist eine Ausführungsform, bei der jede Aktion 36, so wie oben beschrieben, einen ersten und einen zweiten Zeitwert 40, 42 zur Kodierung eines Startzeitpunkts und einer Dauer oder eines Startzeitpunkts und eines Endpunkts umfasst. Die Überwachung des Erreichens eines solchen Endpunkts oder das Verstreichen der vorgegebenen Dauer ist im Flussdiagramm der in Figur 6 gezeigten Art nicht ohne Weiteres darstellbar, speziell wenn davon auszugehen ist, dass in der Zeit bis zum Erreichen des Endzeitpunkts evtl. weitere Aktionen 36 interpretiert werden. Wenn für jede Aktion 36 jedoch sichergestellt ist, dass sämtliche Aktionen 36 nacheinander und ohne Überlappung ausgeführt werden, lässt sich das Flussdiagramm in Figur 6 ohne Weiteres erweitern, indem zwischen dem fünften Funktionsblock 68 und dem sechsten Funktionsblock 70 ein weiterer Funktionsblock nach Art des vierten Funktionsblocks 66 eingeführt wird, mit dem das Verstreichen der vorgegebenen Dauer oder das Erreichen des Endzeitpunkts abgewartet wird. Eine sequentielle Abfolge einzelner Aktionen 36 ohne Überlappungen wird sich üblicherweise erreichen lassen, wenn eine Aktion 36 vergleichsweise abstrakte Betriebszustände des Waschautomaten 10 kodiert, also z.B. Spülen, Waschen, Heizen, Schleudern, Trocknen, usw. Dann kann ein durch eine Aktion 36 kodiertes "Schleuderprogramm" zu einem durch einen ersten Zeitwert 40 vorgegebenen Startzeitpunkt begonnen werden und wird unter Kontrolle des Steuerungsprogramms 20 exakt für die durch den zweiten Zeitwert 42 kodierte Dauer oder bis zu dem durch den zweiten Zeitwert 42 kodierten Endzeitpunkt ausgeführt. Wenn die Aktionen 36 eines Waschautomatenprogramms 24 feingranularere Aktionen 36 in Bezug auf dessen Einheiten oder Aggregate kodieren, z.B. Trommelmotor ein, Trommelmotor aus, Heizaggregat ein, Heizaggregat aus, Wasserzufuhr ein, Wasserzufuhr aus, wird es günstiger sein, wenn man eine Aktion wie z.B. "Schleudern" durch mindestens zwei Aktionen 36 in einem Waschautomatenprogramm 24 kodiert, wobei eine erste Aktion 36 die Aktivierung des Trommelmotors mit der zum Schleudern vorgesehenen Drehzahl zu dem durch die Aktion 36 und deren ersten Zeitwert 40 kodierten Startzeitpunkt kodiert und zum Deaktivieren des Trommelmotors und zum Beenden des Schleudergangs eine weitere Aktion 36 mit einer entsprechenden, die Deaktivierung des Trommelmotors bewirkenden Kennung 38 vorsieht, wobei der erste und einzige Zeitwert 40 einer solchen Aktion 36 den Endzeitpunkt des Schleudergangs und damit dessen Dauer kodiert. Beide Realisierungsformen sind grundsätzlich gleichwertig und die Auswahl einer der beiden Realisierungsformen ist implementationsabhängig.

Das oben beschriebene Beispiel kann entsprechend auch auf Wäschetrockner, Geschirrspüler, Gargeräte, wie beispielsweise Backofen, Dampfgarer oder Mikrowellenofen, oder Getränkebereiter übertragen werden.

### Bezugszeichenliste

- 10: Waschautomat
- 12: Waschtrommel
- 14: Steuerungseinrichtung
- 16: Verarbeitungseinheit
- 18: Speicher
- 20: Steuerungsprogramm
- 22: Speicherbereich
- 24: Waschautomatenprogramm
- 26: Waschautomatenprogrammtabelle
- 28: Titel
- 30: Liste
- 32: Monitor
- 34: Prüfsumme
- 36: Aktion
- 38: Kennung
- 40: erster Zeitwert
- 42: zweiter Zeitwert
- 44: Unterprogrammsammlung
- 46: Verweistabelle
- 48: Programmcodeblock
- 50: Programmcodeanweisung
- 60: erster Funktionsblock
- 62: zweiter Funktionsblock
- 64: dritter Funktionsblock
- 66: vierter Funktionsblock
- 68: fünfter Funktionsblock
- 70: sechster Funktionsblock

## Patentansprüche

1. Verfahren zum Betreiben eines Haushaltsgerätes (10), wie Waschautomat, Wäschetrockner, Geschirrspüler, Gargerät oder Getränkebereiter,
wobei das Haushaltsgerät (10) einen Speicher (18) mit einem Steuerungsprogramm (20) und zumindest einem vom Steuerungsprogramm (20) ausführbaren Haushaltsgerätprogramm (24) sowie eine Verarbeitungseinheit (16) zur Ausführung des Steuerungsprogramms (20) umfasst,
wobei zumindest ein Teil des Speichers (18) in Speicherbereiche (22) unterteilt ist und wobei ein Haushaltsgerätprogramm (24) jeweils einen der Speicherbereiche (22) belegt,
wobei ein belegter Speicherbereich (22) dem Steuerungsprogramm (20) notifiziert wird und der notifizierte Speicherbereich (22) in eine Haushaltsgerätprogrammtabelle (26) eingetragen wird,
wobei im Betrieb des Haushaltsgeräts (10) aus der Haushaltsgerätprogrammtabelle (26) jeweils genau ein Haushaltsgerätprogramm (24) ausgewählt und das ausgewählte Haushaltsgerätprogramm (24) durch das in einer Verarbeitungseinheit (16) in der Form eines Mikroprozessors ausgeführten Steuerungsprogramm (20) aufgerufen und ausgeführt wird,
**dadurch gekennzeichnet,**
**dass** das Laden des Haushaltsgeräteprogramms (24) in einen der Speicherbereiche (22) unter Kontrolle des Steuerungsprogramms (20) stattfindet, indem mittels des Steuerungsprogramms (20) ein freier Speicherbereich (22) oder ein Speicherbereich mit einem nicht benutzten Haushaltgeräteprogramm ermittelt wird, wobei die Notifikation über im Speicher vorhandene Haushaltsgeräteprogramme derart erfolgt, in dem das in der Verarbeitungseinheit (16) ausgeführte Steuerungsprogramm (20) zu geeigneten Zeitpunkten eine Art Suchlauf über die im Speicher (18) gebildeten Speicherbereiche (22) ausführt und jedes Mal beim Auffinden eines gültigen Haushaltgeräteprogramms (24) eine entsprechende Referenzierung in die Haushaltsgeräteprogrammtabelle (26) aufgenommen wird.

2. Verfahren nach Anspruch 1, wobei beim Betrieb des Haushaltsgeräts (10) durch das Steuerungsprogramm (20) die Haushaltsgerätprogrammtabelle (26) interpretiert sowie basierend darauf einem Benutzer eine Liste (30) mit Referenzen auf Speicherbereiche (22) zur Verfügung stehender Haushaltsgerätprogramme (24) präsentiert wird und wobei zur Anpassung einer Reihenfolge der Haushaltsgerätprogramme (24) in der Liste (30) Referenzen auf Speicherbereiche (22) mit Haushaltsgerätprogrammen (24) in der Haushaltsgerätprogrammtabelle (26) verändert werden.

3. Verfahren nach einem der Ansprüche 1 oder 2, wobei einem Haushaltsgerätprogramm (24) eine Prüfsumme (34) zugeordnet ist und wobei vor Ausführung des Haushaltsgerätprogramms (24) und anhand desselben durch das Steuerungsprogramm (20) ein Vergleichswert ermittelt und mit der Prüfsumme (34) verglichen wird, wobei die Ausführung des Haushaltsgerätprogramms (24) nur bei Übereinstimmung oder zumindest ausreichender Übereinstimmung von Vergleichswert und Prüfsumme (34) erfolgt.

4. Verfahren nach einem der Ansprüche 1, 2 oder 3, wobei jedes Haushaltsgerätprogramm (24) Daten zur Kodierung einer Folge von Aktionen (36) umfasst und wobei jede Aktion (36) mit einem einen Startzeitpunkt kodierenden ersten Zeitwert (40) oder mit einem einen Startzeitpunkt kodierenden ersten Zeitwert (40) sowie einem eine Dauer kodierenden zweiten Zeitwert (42) kombiniert ist.

5. Verfahren nach Anspruch 4, wobei das Steuerungsprogramm (20) für jede Aktion (36) eine Programmcodeanweisung (50) oder eine Folge von Programmcodeanweisungen (50) zur Aktivierung oder Deaktivierung des oder jedes durch die Aktion (36) kodierten Aggregats des Haushaltsgeräts (10) aufweist.

6. Verfahren nach Anspruch 5, wobei das Steuerungsprogramm (20) eine Zuordnung (46) von jeweils einer Aktion (36) zu einem oder mehreren Aggregaten des Haushaltsgeräts (10) und einer Aktivierungsart umfasst.

7. Verfahren nach Anspruch 1,
wobei der Suchlauf beim Einschalten des Haushaltsgerätes ausgeführt wird.

8. Computerprogramm mit Programmcode-Mitteln, um alle Schritte von jedem beliebigen der Ansprüche 1 bis 7 auszuführen, wenn das Computerprogramm auf einer Steuerungseinrichtung (14) für einen Haushaltsgerät (10) ausgeführt wird.

9. Digitales Speichermedium (18) mit elektronisch auslesbaren Steuersignalen, die so mit einem programmierbaren Steuergerät (10) zusammenwirken können, um ein Verfahren nach einem der Ansprüche 1 bis 7 durchzuführen.

10. Haushaltsgerät (10) mit einer Verarbeitungseinheit (16) und einem Speicher (18) in den ein Computerprogramm nach Anspruch 8 geladen ist, das im Betrieb des Haushaltsgerät (10) durch die Verarbeitungseinheit (16) ausgeführt werden kann.

## Claims

1. Method for operating a domestic appliance (10), such as a washing machine, tumble dryer, dishwasher, cooking appliance or beverage preparation machine, the domestic appliance (10) comprising a memory (18) having a control program (20), at least one domestic appliance program (24) which can be executed by the control program (20), and a processing unit (16) for executing the control program (20), at least a portion of the memory (18) being divided into memory regions (22), and one domestic appliance program (24) occupying one of the memory regions (22) respectively, an occupied memory region (22) being notified to the control program (20) and the notified memory region (22) being entered in a domestic appliance program table (26), in each case precisely one domestic appliance program (24) being selected from the domestic appliance program table (26) during operation of the domestic appliance (10), and the selected domestic appliance program (24) being called up and executed by means of the control program (20) which is executed in a processing unit (16) in the form of a microprocessor,
**characterised in that**
the domestic appliance program (24) is loaded in one of the memory regions (22) in a manner controlled by the control program (20) by means of the control program (20) determining a free memory region (22) or a memory region comprising an unused domestic appliance program, the notification of domestic appliance programs available in the memory occurring in such a way that the control program (20) executed in the processing unit (16) executes a type of search at appropriate times of the memory regions (22) formed in the memory (18) and every time a valid domestic appliance program (24) is found, a corresponding referencing is recorded in the domestic appliance program table (26).

2. Method according to claim 1, wherein, during operation of the domestic appliance (10) via the control program (20), the domestic appliance program table (26) is interpreted and, on this basis, a list (30) having references to memory regions (22) of the domestic appliance programs available (24) is presented to a user and wherein, for customising an order of the domestic appliance programs (24) in the list (30), references to memory regions (22) having domestic appliance programs (24) are changed in the domestic appliance program table (26).

3. Method according to either claim 1 or claim 2, wherein a domestic appliance program (24) is assigned a checksum (34) and wherein, before executing the domestic appliance program (24) and by means of said program, a comparative value is determined via the control program (20) and compared with the checksum (34), wherein the domestic appliance program (24) is only executed when there is correspondence, or at least sufficient correspondence, between the comparative value and the checksum (34).

4. Method according to any of claims 1, 2 or 3, wherein each domestic appliance program (24) comprises data for coding a series of actions (36) and wherein each action (36) is combined with a first time value (40) coding a start time or with a first time value (40) coding a start time and with a second time value (42) coding a duration.

5. Method according to claim 4, wherein the control program (20) comprises for each action (36) a program code instruction (50) or a series of program code instructions (50) for activating or deactivating the or each unit of the domestic appliance (10) coded by the action (36).

6. Method according to claim 5, wherein the control program (20) comprises an assignment (46) of a respective action (36) to one or more units of the domestic appliance (10) and to an activation type.

7. Method according to claim 1, wherein the search is executed when the domestic appliance is turned on.

8. Computer program comprising program code means for carrying out all the steps of any of claims 1 to 7 if the computer program is executed on a control means (14) for a domestic appliance (10).

9. Digital storage medium (18) comprising electronically readable control signals which can interact with a programmable control device (10) in order to carry out a method according to any of claims 1 to 7.

10. Domestic appliance (10) comprising a processing unit (16) and a memory (18) in which a computer program according to claim 8 is loaded, which computer program can be executed by means of the processing unit (16) during operation of the domestic appliance (10).

## Revendications

1. Procédé de fonctionnement d'un appareil électroménager (10), tel que machine à laver automatique, sèche-linge, lave-vaisselle, appareil de cuisson ou préparateur de boissons, dans lequel l'appareil électroménager (10) comprend une mémoire (18) avec un programme de commande (20) et au moins un programme d'appareil électroménager (24) exécutable par le programme de commande (20) ainsi qu'une unité de traitement (16) pour l'exécution du programme de commande (20), dans lequel au moins une partie de la mémoire (18) est divisée en zones de mémoire (22) et dans lequel un programme d'appareil électroménager (24) occupe respectivement une des zones de mémoire (22), dans lequel une zone de mémoire (22) occupée est notifiée au programme de commande (20), et la zone de mémoire (22) notifiée est inscrite dans un tableau de programme d'appareil électroménager (26), dans lequel, pendant le fonctionnement de l'appareil électroménager (10), précisément un programme d'appareil électroménager (24) est respectivement sélectionné dans le tableau de programme d'appareil électroménager (26), et le programme d'appareil électroménager (24) sélectionné est appelé et exécuté par le programme de commande (20) exécuté dans une unité de traitement (16) sous la forme d'un microprocesseur,
**caractérisé en ce que**
le chargement du programme d'appareil électroménager (24) a lieu dans une des zones de mémoire (22) sous le contrôle du programme de commande (20) par le fait qu'une zone de mémoire (22) libre ou une zone de mémoire avec un programme d'appareil électroménager non utilisé est déterminée au moyen du programme de commande (20), dans lequel l'avis de programmes d'appareil électroménager présents dans la mémoire est donné de manière à permettre au programme de commande (20) exécuté dans l'unité de traitement (16) d'exécuter à des moments appropriés une espèce de recherche portant sur les zones de mémoire (22) formées dans la mémoire (18) et, à chaque fois qu'un programme d'appareil électroménager (24) valide est trouvé, un référencement correspondant est enregistré dans le tableau de programme d'appareil électroménager (26).

2. Procédé selon la revendication 1, dans lequel, pendant le fonctionnement de l'appareil électroménager (10) par le programme de commande (20), le tableau de programme d'appareil électroménager (26) est interprété et, sur cette base, une liste (30) avec des références à des zones de mémoire (22) de programmes d'appareil électroménager (24) disponibles est présentée à un utilisateur, et dans lequel, pour l'adaptation d'un ordre de succession des programmes d'appareil électroménager (24) dans la liste (30), des références à des zones de mémoire (22) avec des programmes d'appareil électroménager (24) sont modifiées dans le tableau de programme d'appareil électroménager (26).

3. Procédé selon l'une des revendications 1 ou 2, dans lequel une somme de contrôle (34) est affectée à un programme d'appareil électroménager (24) et dans lequel, avant l'exécution du programme d'appareil électroménager (24) et à l'aide de celui-ci, une valeur de comparaison est déterminée par le programme de commande (20) et comparée avec la somme de contrôle (34), dans lequel l'exécution du programme d'appareil électroménager (24) s'effectue uniquement en cas de coïncidence ou au moins de coïncidence suffisante de la valeur de comparaison et de la somme de contrôle (34).

4. Procédé selon l'une des revendications 1, 2 ou 3, dans lequel chaque programme d'appareil électroménager (24) comprend des données pour le codage d'une séquence d'actions (36), et dans lequel chaque action (36) est combinée avec une première valeur de temps (40) codant un instant de démarrage ou avec une première valeur de temps (40) codant un instant de démarrage ainsi qu'avec une deuxième valeur de temps (42) codant une durée.

5. Procédé selon la revendication 4, dans lequel le programme de commande (20) présente pour chaque action (36) une instruction de code de programme (50) ou une séquence d'instructions de code de programme (50) pour l'activation ou la désactivation du groupe ou de chaque groupe de l'appareil électroménager (10) codé par l'action (36).

6. Procédé selon la revendication 5, dans lequel le programme de commande (20) comprend une affectation (46) de respectivement une action (36) à un ou plusieurs groupes de l'appareil électroménager (10) et d'un type d'activation.

7. Procédé selon la revendication 1,
dans lequel la recherche est exécutée lors de la mise en marche de l'appareil électroménager.

8. Programme informatique avec des moyens de code de programme pour exécuter toutes les étapes de n'importe laquelle des revendications 1 à 7, quand le programme informatique est exécuté sur un dispositif de commande (14) pour un appareil électroménager (10).

9. Support de mémoire numérique (18) avec des signaux de commande lisibles électroniquement qui peuvent ainsi coopérer avec un appareil de commande (10) programmable pour exécuter un procédé selon l'une des revendications 1 à 7.

10. Appareil électroménager (10) avec une unité de traitement (16) et une mémoire (18) dans laquelle est chargé un programme informatique selon la revendication 8 qui peut être exécuté pendant le fonctionnement de l'appareil électroménager (10) par l'unité de traitement (16).
